# EUROPÄISCHE PATENTANMELDUNG

(11) **EP 0 898 191 A1**
(43) Veröffentlichungstag der Anmeldung: **24.02.1999**
(21) Anmeldenummer: 98113753.2
(22) Anmeldetag: 23.07.1998
(51) Int. Cl.: G02B 21/26

(54) **Koaxialtrieb für den Objekttisch eines Mikroskops**

(30) Priorität: 16.08.1997 DE 19735492
(71) Anmelder: Carl Zeiss Jena GmbH, 07740 Jena (DE)
(72) Erfinder: Kraft, Winfried, Dipl.-Ing., 35614 Asslar-Werdorf (DE)
(74) Vertreter: Hampe, Holger

(57) **Zusammenfassung**

Koaxialtrieb für den Objekttisch eines Mikroskops, mit zwei horizontal und senkrecht zueinander verschiebbarer Tischteilen (2,3), die in einer ortsfesten Führung (1) gelagert sind, und mittels eines Bedienelementes (6,22) für jeden Tischteil verschoben werden. Die beiden Bedienelemente (6,22) sind um eine koaxiale Achse drehbar und bei einer Verschiebung des ersten (2) oder zweiten Tischteils (3) behalten sie ihre Lage ortsfest im Raum bei. Zur Verschiebung des zweiten Tischteils (3) in dem ersten Tischteil (2) gelagert sind um die koaxiale Achse verschwenkbare erste Kraftübertragungsmittel vorgesehen, die über erste Getriebemittel (13,14) mit dem zweiten Bedienelement in Verbindung stehen, und es sind am zweiten Tischteil über zweite Getriebemittel (9,10,16) angreifenden zweite Kraftübertragungsmittel vorgesehen. Zur Kraftübertragung von den ersten auf die zweiten, Krafttübertragungsmittel ist zwischen diesen eine formschlüssig in einer Führung (15) verschieblich gelagerte Drehstange (12) vorgesehen, wobei bei Verschiebung des zweiten Tischteils (3) die Drehstange in der Führung abgleitet. Entweder die Führung (15) oder die Drehstange (12) wird über die ersten Kraftübertragungsmittel gedreht und die Kraftübertragung erfolgt durch Übertragung der Drehbewegung auf die Drehstange (12) oder die Führung (15).

## Beschreibung

Die Erfindung betrifft einen Koaxialtrieb für den Objekttisch eines Mikroskops nach dem Oberbegriff des Anspruchs 1.
Eine derartige gattungsgemäße Anordnung ist beispielsweise in DE 19532008 A1 der Anmelderin beschrieben.

Bei den üblichen Kreuztischen für Mikroskope werden die beiden Koordinatenbewegungen "X" und "Y" durch einen sogenannten Koaxialtrieb betätigt. Dabei bleibt der Koaxialtrieb bei der X-Bewegung ortsfest. Bei der Y-Bewegung wandert der Koaxialtrieb in Y-Richtung mit. Das ist jedoch außerordentlich unergonomisch.
Wünschenswert ist ein gleichbleibender Ort des Koaxialtriebes und damit ein räumlich fester Abstand zum Z-Feintrieb.
In DE 3514431 A1 wird ein Mikroskoptischantrieb mit an koaxial gelagerten Wellen befestigten Triebknöpfen beschrieben, wobei die Kraftübertragung durch kompliziert geführte Zugmittel erfolgt, die über an den Tischplatten befestigte Umlenkrollen laufen und deren nicht vollständig zu eliminierender Schlupf keine exakt reproduzierbare Tischposition gestattet. Die Bedienung ist durch die vielen Umlenkungen nicht feinfühlig genug durchführbar. Exakte Positionierungen, z.B. in Gewebszellen im Bereich weniger µm, sind nicht möglich.
Andere Lösungen mit ortsfesten Verstelleinrichtungen, jedoch mit erheblichem baulichen Aufwand, sind in DE 3027461 C2 sowie DE 3521047 C1 beschrieben. Die DE 3027461 C2 betrifft jedoch mehr das Entkoppeln der X-Y- Koordinatenbewegung durch Ausschwenken des Koaxialtriebes, der mittels eines Reibrades mit der X-Y-Bewegung verbunden ist.

DE - GM 1978009 betrifft einen Objekthalter, der ein Zubehör an Mikroskopen darstellt und in der Regel auf einem Mikroskoptisch befestigt wird, um Objekte über die meist feste Tischplatte zu bewegen.

DE 3521047 C1 beschreibt getrennte Geradführungen für X und Y. Diese sind teuer, verlangen viel Wartung und benötigen viel Platz. Das Gleiten der Profilachse 28 verursacht Erschütterungen und Geräusche, die den konzentriert arbeitenden Bediener stören könnten.

Aufgabe der Erfindung ist ein einfach aufgebauter, ortsfester und platzsparender Koaxialtrieb.
Diese Aufgabe wird durch die Markmale des ersten Anspruchs gelöst.
Nachstehend wird anhand der schematischen Zeichnungen der Aufbau, die Wirkungsweise und die Vorteile der Erfindung näher erläutert.
Es zeigen:

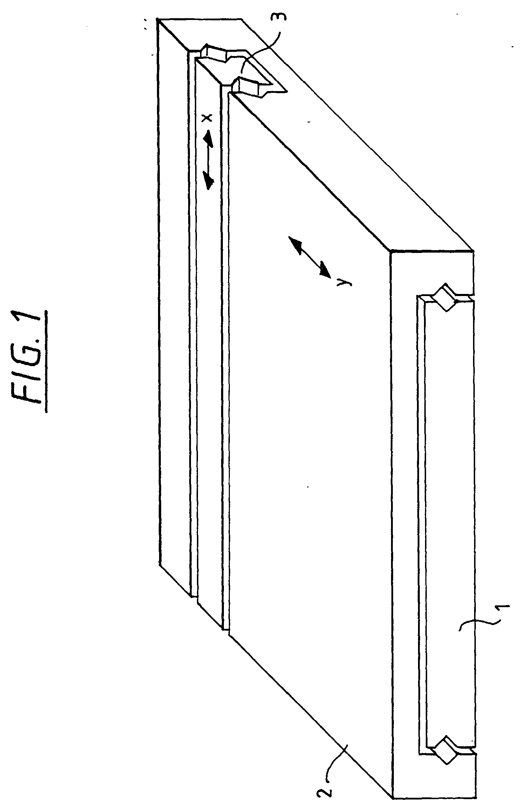

Fig. 1: Die ineinander geführten Tischeinheiten zur X- und Y - Verschiebung.

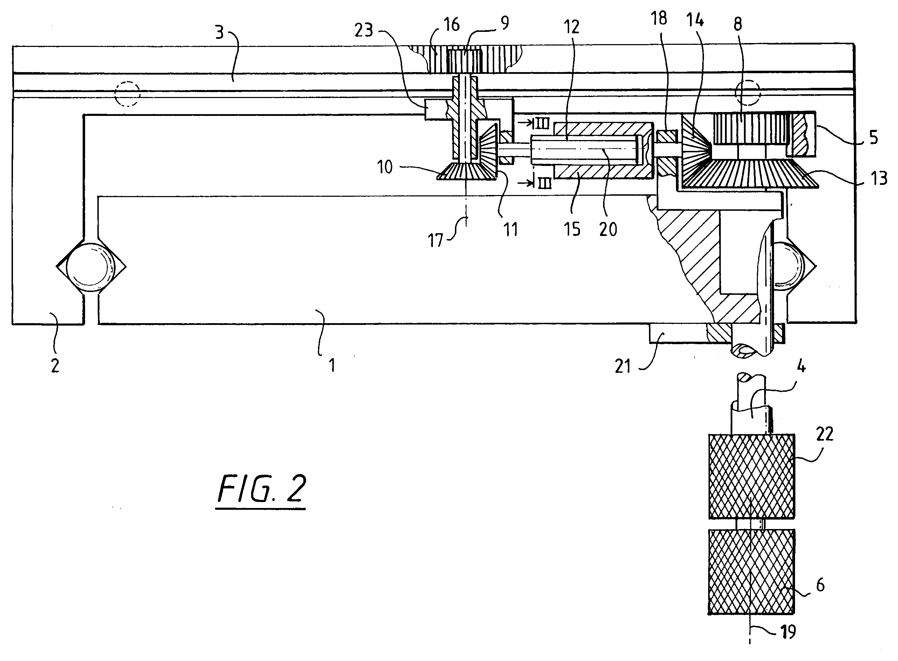

Fig. 2: Einen Teilquerschnitt durch den erfindungsgemäßen Koaxialtrieb.
Fig. 3a) -f): Einen Teilquerschnitt entlang der Linie A in Fig. 2 sowie weitere mögliche Ausführungen der Gleitstange 12

Eine Tischplatte ( 1 ) ist an der Tischgabel (nicht gezeichnet) eines Mikroskopes fest angeschraubt bzw. anderweitig befestigt.
Eine Y-Tischplatte ( 2 ) für die Y - Bewegung ist verschieblich auf der Tischplatte (1), beispielsweise über Gleit- oder Kugellager befestigt.
Die Y-Tischplatte ( 2 ) enthält den sogenannten Schlitten ( 3 ) für die X - Bewegung verschieblich über Gleit- oder Kugellager.
Er ist über seine Führung funktional in die Y-Tischplatte ( 2 ) integriert.
An der festen Tischplatte ( 1 ) ist in einer nicht dargestellten Befestigungseinrichtung (z.B.: Klemmung) weiterhin der Koaxialtrieb ( 4 ) befestigt.
Er treibt sowohl den X - Schlitten ( 3 ) als auch die Y - Tischplatte ( 2 ) an. Er steht dabei in funktionalem Eingriff (z.B. über eine Verzahnung) mit der Zahnstange ( 5 ) an der Y-Tischplatte ( 2 ).
Durch Drehen des entsprechenden Rändelknopfes ( 6 ) wird die Y - Tischplatte ( 2 ) über das Ritzel ( 8 ) und die Zahnstange ( 5 ) parallel zur festen Tischplatte ( 1 ) in Y - Richtung bewegt.

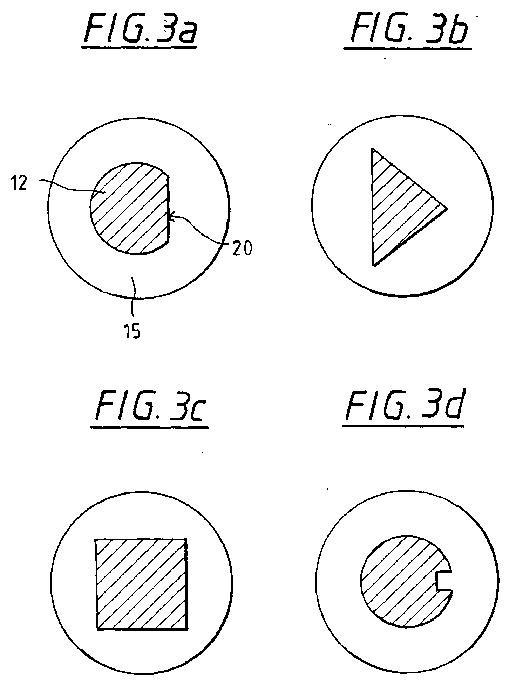

Gleichzeitig steht das Ritzel ( 9 ) in funktionalem Eingriff mit einem Kegelradpaar (10/11). Das Kegelrad (11) ist fest mit der Gleitstange ( 12 ) verbunden. Die Gleitstange (12) ist ihrerseits drehbar im Halter ( 23 ) gelagert.
Antriebsritzel ( 13 ) am Koaxialtrieb ( 4 ) und Abtriebsritzel ( 14 ) stehen in funktionalem Eingriff miteinander.
Abtriebsritzel ( 14 ), hier ein Kegelrad, ist fest mit der Gleitmutter (15 ) verbunden. Die Achse von Kegelrad ( 14 ) und Gleitmutter (15 ) ist drehbar im Halter ( 18 ) gelagert.
Die Gleitstange ( 12 ) ist in Längsrichtung an einer Seite abgeflacht, wie in Fig. 3a dargestellt. Sie ist formschlüssig, aber verschieblich mit der Gleitmutter ( 15 ) verbunden. Gemäß Fig. 3b) - 3f) sind weitere Formen der Gleitstange sowie der Innenform der Gleitmutter denkbar, die ein formschlüssiges Mitnehmen der Gleitstange gewährleisten.
Die Gleitstange ( 12 ) kann somit in der Gleitmutter ( 15 ) in Achsrichtung ( 20 ) gleiten. Die Gleitstange (12 ) besitzt am gegenüberliegenden Ende ein drehfest mit ihr verbundenes Antriebsritzel ( 11 ), hier ein Kegelrad.
Es steht in funktionalem Eingriff mit dem Abtriebsritzel (10), hier ein Kegelrad. Das Kegelrad ( 10 ) ist drehfest mit dem Ritzel ( 9 ) verbunden, welches seinerseits in funktionellem Eingriff mit der am X - Schlitten befestigten Zahnstange ( 16 ) steht. Die vorzugsweise vertikal angeordnete Drehachse ( 17 ) des Abtriebsritzels ( 9 ) für den X - Schlitten ( 3 ) ist zusammen mit dem Kegelradpaar ( 13, 14 ) am Y - Schlitten um die Drehachse des Abtriebritzels ( 13 ) drehbar gelagert, so daß der funktionale Eingriff zum X - Schlitten ( 3 ) immer optimal garantiert ist.

Gleichzeitig sind Verbindungsteil ( 18 ), Kegelrad ( 14 ) mit Gleitmutter (15 ), Gleitstange (12 ) mit Kegelrad ( 11 ), Kegelrad ( 10 ) mit Antriebsritzel ( 9 ) und Halterung ( 23 ) insgesamt so um die vertikale Drehachse ( 17 ) des Abtriebsritzels ( 9 ) für den X - Schlitten ( 3 ) gelagert, daß sie der Bewegung der Y- Tischplatte ( 2 ) bei deren Y - Bewegung folgen können, ohne daß die form- und kraftschlüssigen Verbindungen beeinflußt oder unterbrochen werden.
Die Gleitstange ( 12 ) bewegt sich lediglich entsprechend dem Hub, der von der Y-Tischplatte verursacht wird, in der Gleitmutter ( 15 ) hin und her. Gleitführung und Eingriffe der Ritzel sind mittels mechanischer Mittel so ausgelegt, daß keine sog. Umkehrlose ( 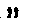 Spiel") vorhanden ist.

Realisiert ist hiermit ein Kreuztisch für Mikroskope, im wesentlichen bestehend aus einem ortsfesten Koaxialtrieb ( 4 ), einer an der Tischaufnahme des Mikroskopes (nicht gezeichnet) befestigten festen Tischplatte ( 1 ), einer an bzw. auf der Tischplatte ( 1 ) verschieblich gelagerten Y-Tischplatte ( 2 ), sowie einem in der Y-Tischplatte verschieblich gelagerten X-Schlitten ( 3 ).
Der Koaxialtrieb ( 4 ) ist seinerseits an bzw. in einer an der Tischplatte ( 1 ) vorhandenen Befestigungseinrichtung ( 21 ) befestigt (z.B. geklemmt).
Der Koaxialtrieb ( 4 ) besteht aus zwei unabhängig voneinander funktionierenden, koaxialen Antriebselementen, vorzugsweise als Ritzel, Kegelrädern, Reibräder oder andere Einrichtungen ähnlicher Funktion.
Das Antriebselement (z.B.: Ritzel/ Kegel-, Reibrad) ( 8 ) für die Y-Bewegung steht in funktionalem Eingriff mit einem Abtriebselement ( Zahnstange) ( 5 ), welches fest mit der Tischplatte ( 2 ) verbunden ist. Beim Drehen des Rändelknopfes ( 6 ) dreht sich das Antriebselement ( 8 ) und verschiebt die Tischplatte ( 2 ) in Y - Richtung Das Antriebselement (z.B.: Ritzel/ Kegel-, Reibrad) ( 13 ), das mit Hilfe des Knopfes (22) für die X-Bewegung verantwortlich ist, steht in funktionalem Eingriff mit dem Abtriebselement (z.B.: Ritzel/ Kegel-, Reibrad) (14 ), welches als funktionelle Einheit um die Drehachse ( 19 ) des Antriebselementes ( 13 ) drehbar gelagert ist. Das Abtriebselement (z.B. Kegelrad) ( 14 ) ist drehfest mit der Gleitmutter ( 15 ) verbunden und im Halter (18 ) drehbar gelagert.
Die Gleitstange ( 12 ), die formschlüssig, aber verschieblich mit der Gleitmutter (15) verbunden ist, kann sich nur in Richtung der Achse ( 20 ) verschieben.
Die Gleitstange ( 12 ) besitzt auf der gegenüberliegenden Seite ein Antriebselement (z.B.: Ritzel, Kegelrad) ( 11 ), welches sich in funktionalem Eingriff mit einem weiteren Abtriebselement (z.B.: Ritzel, Kegelrad) ( 10 ) befindet.
Kegelrad ( 11 ) und Kegelrad ( 17 ) sind jeweils drehbar im Halter ( 23 ) gelagert. Kegelrad ( 10 ) und Ritzel ( 9 ) sind drehfest miteinander verbunden und als Funktionseinheit drehbar im Halter ( 23 ) gelagert. Ritzel ( 9 ) steht in funktionalem Eingriff mit einem entsprechenden Funktionselement (z.B.: Zahnstange) ( 16 ) am X - Schlitten ( 3 ).
Ritzel ( 14 ) mit Gleitmutter ( 15 ), Gleitstange ( 12 ) mit Antriebselement (z.B. Ritzel) ( 11 ), Abtriebselement ( 10 ) mit Antriebselement ( 9 ) am X - Schlitten ( 3 ) und Halterung ( 23 ) sind über die Halterung ( 18 ) drehbar um die Drehachse ( 19 ) des Koaxialtriebes ( 4 ) gelagert.
Wird das Rändelrad ( 22 ) am Koaxialtrieb ( 4 ) gedreht, dreht sich das damit drehfest verbundene Antriebselement (13 ) und das Abtriebselement ( 14 ) zusammen mit der Gleitmutter ( 15 ).
Damit dreht sich zwangsweise auch die formschlüssig verbundene, nur in Achsrichtung ( 20 ) verschiebliche Gleitstange (12 ).
Sie dreht das fest mit ihr verbundene Antriebsritzel ( 11 ) zusammen mit dem Abtriebselement ( 17 ). Dieses steht in funktionalem Eingriff mit dem Antriebsritzel ( 9 ) des X - Schlittens ( 3 ).
Die Halterung ( 23 ) ist drehbar um die Achse ( 17 ) gelagert.
Wird der Y - Schlitten bewegt, verschiebt sich lediglich die Gleitstange ( 12 ) in der Gleitmutter ( 15 ) im Rahmen der Abstandsdifferenz der beiden Drehachsen ( 17 ) und ( 19 ).
Die Erfindung ist nicht an die dargestellte Ausführungsform gebunden.
Insbesondere können Gleitstange 12 und Gleitmutter 15 vertauscht werden, so daß die Drehbewegung von einer mit dem Abtriebsritzel 14 verbundenen Gleitstange auf eine mit dem Antriebsritzel 11 verbundene Gleitmutter ( nicht dargestellt) erfolgt, wobei wiederum ein Abgleiten der Gleitstange in der Gleitmutter bei Verschiebung des X - Schlittens 2 erfolgt.

## Patentansprüche

1. Koaxialtrieb für den Objekttisch eines Mikroskops,
mit einer ortsfesten Führung (1), die einen ersten, in einer ersten Verschieberichtung horizontal verschiebbaren Tischteil (2) lagert, der seinerseits einen in einer zweiten Verschieberichtung horizontal und vorzugsweise senkrecht zur ersten Verschieberichtung verschiebbaren, zweiten Tischteil (3) lagert,
mit einem ersten, am ersten Tischteil (2) angreifenden Bedienelement (6) zur Verschiebung des ersten Tischteils (2) in der ersten Verschieberichtung und einem zweiten Bedienelement (22) zur Verschiebung des zweiten Tischteils (3) in der zweiten Verschieberichtung,
wobei die beiden Bedienelemente (6,22) um eine koaxiale Achse drehbar sind und bei einer Verschiebung des ersten (2) oder zweiten Tischteils (3) ihre Lage ortsfest im Raum beibehalten,
dadurch gekennzeichnet, daß
zur Verschiebung des zweiten Tischteils (3) um die koaxiale Achse verschwenkbare erste Kraftübertragungsmittel vorgesehen sind, die über erste Getriebemittel (13,14) mit dem zweiten Bedienelement in Verbindung stehen,
am zweiten Tischteil über zweite Getriebemittel (9, 10 16) angreifenden zweite Kraftübertragungsmittel vorgesehen sind
zur Kraftübertragung von den ersten auf die zweiten Kraftübertragungsmittel zwischen diesen eine formschlüssig in einer Führung ( 15) verschieblich gelagerte Drehstange ( 20) vorgesehen ist, wobei bei Verschiebung des zweiten Tischteils (3) die Drehstange in der Führung abgleitet,
und entweder die Führung ( 15) oder die Drehstange ( 20) mit den ersten Kraftübertragungsmitteln um die koaxiale Achse verschwenkbar ist,
über die ersten Kraftübertragungsmittel gedreht wird und die Kraftübertragung durch Übertragung der Drehbewegung auf die Drehstange ( 20) oder die Führung (15) erfolgt.
